# EUROPÄISCHE PATENTSCHRIFT

(11) **EP 0 896 264 B1**
(45) Veröffentlichungstag und Bekanntmachung des Hinweises auf die Patenterteilung: **12.03.2008**
(21) Anmeldenummer: 98111403.6
(22) Anmeldetag: 20.06.1998
(51) Int. Cl.: G05B 19/042

(54) **Programmierbare Schnittstelleneinrichtung für die Gebäudesystemtechnik**
Programmable interface for technical systems in a building
Interface programmable pour l'équipement d'un immeuble

(30) Priorität: 08.08.1997 DE 19734376
(43) Veröffentlichungstag der Anmeldung: 10.02.1999
(73) Patentinhaber: ABB PATENT GmbH, 68526 Ladenburg (DE)
(72) Erfinder: Heilig, Peter, Dipl.-Ing., 69121 Heidelberg (DE); Kaiser, Stefan, Dipl.-Witsch.Ing., 69221 Dossenheim (DE)
(74) Vertreter: Miller, Toivo

(56) Entgegenhaltungen:
- DE-A- 4 133 636
- DE-A- 4 423 839
- US-A- 4 417 151
- US-A- 4 616 306

## Beschreibung

Die Erfindung bezieht sich auf eine programmierbare Schnittstelleneinrichtung für Bussysteme der Gebäudesystemtechnik.

Als Bussystem der Gebäudesystemtechnik ist insbesondere der Europäische Installationsbus EIB bekannt, der besondere Busleitung zur Kommunikation erfordert und der beschrieben ist im ZVEI/ZVEH-Handbuch Gebäudesystemtechnik, herausgegeben von der Wirtschaftsförderungsgesellschaft der Elektrohandwerke, Frankfurt, 1993, sowie Netzbussysteme, wie beispielsweise der in der Druckschrift BJE 0001-01-0750 der Busch-Jaeger Elektro GmbH, Lüdenscheid beschriebene Busch-Powernet EIB. Ein Netzbussystem benötigt keine besonderen Busleitungen, da zur Signalübertragung das 230V-Netz benutzt wird.

Die Bussysteme weisen eine Reihe von zugehörigen Systemkomponenten oder Busgeräten auf. Insbesondere ist eine Busankopplung eine solche Systemkomponente, die je nach der Signalübertragungsart ausgeführt ist und die einen Mikroprozessor oder Mikrocontroller enthält, auch Anwendungssoftware beinhalten kann. Zumindest ist die Vergabe einer physikalischen Adresse möglich.

Ein Busteilnehmer oder Busgerät, das an Busleitungen anschließbar sein soll, benötigt eine Schnittstelleneinrichtung mit zumindest einer Busankopplung, gegebenenfalls. auch weiterer Funktionseinheiten.

Ein typisches Busgerät zum Anschluß an ein Installationsbussystem ist ein Mehrfachtaster mit potentialfreien Kontakten zur Ausführung von Schaltbefehlen. Die zugehörige Schnittstelleneinrichtung weist eine Eingangsschaltung zur Erfassung der Kontaktstellung auf. Entsprechend der Kontaktstellung werden über die Busankopplung, die Busleitungen und Aktoren Verbraucher, insbesondere Beleuchtungseinrichtungen geschaltet. Schalthandlungen sind an mehreren Stellen des Bussystems möglich. Als ein Beispiel für ein Busgerät steht das Eingabegerät aus DE 44 23 839 A.

Nachteilig ist dabei, daß die bekannten Busgeräte keine Statusanzeige aufweisen bzw. deren Schnittstelleneinrichtungen keine Statusanzeige ermöglichen, und somit oftmals an einer Bedienstelle nicht ersichtlich ist, ob ein Verbraucher ein- oder ausgeschaltet ist.

Der Erfindung liegt die Aufgabe zugrunde, eine Schnittstelleneinrichtung für Bussysteme anzugeben, die sowohl eine Erfassung von Zuständen von potentialfreien Kontakten, als auch eine Statusanzeige ermöglicht. Außerdem soll die Schnittstelleneinrichtung für unterschiedliche Eingabegeräte verwendbar sein.

Diese Aufgabe wird durch eine Schnittstelleneinrichtung mit den in Anspruch 1 angegebenen Merkmalen gelöst. Vorteilhafte Ausgestaltungen sind in weiteren Ansprüchen angegeben.

Die Schnittstelleneinrichtung kann vorteilhaft als runde Scheibe einer geringen Dicke ausgeführt werden, wodurch sie als Universalschnittstelle in eine beliebige 55 mm-Unterputzdose oder eine Abzweigdose einsetzbar ist. Zur universellen Einsetzbarkeit trägt auch bei , daß die Eingangsschaltung der Schnittstelleneinrichtung programmierbar oder parametrierbar ausgeführt ist, so daß eine Anpassung an unterschiedliche Bedien- oder Eingabegeräte und unterschiedliche Funktionen möglich ist.

Eine weitere Beschreibung der Erfindung erfolgt nachstehend anhand von Ausführungsbeispielen, die in der Zeichnung dargestellt sind

### Es zeigen:

- Fig. 1: eine erste Variante der Schnittstelleneinrichtung, die für den Anschluß an eine als Twisted pair bekannte Busleitung ausgeführt ist,
- Fig. 2: eine zweite Variante der Schnittstelleneinrichtung, die für den Anschluß an ein Netzbussystem ausgeführt ist,
- Fig. 3 und 4: Funktionseinheiten der jeweiligen Schnittstellenvarianten gemäß Fig. 1 bzw. 2,
- Fig. 5 und 6: dritte und vierte Varianten der Schnittstelleneinrichtung, und
- Fig. 7 und 8: die zu den dritten und vierten Varianten gehörigen Funktionseinheiten.

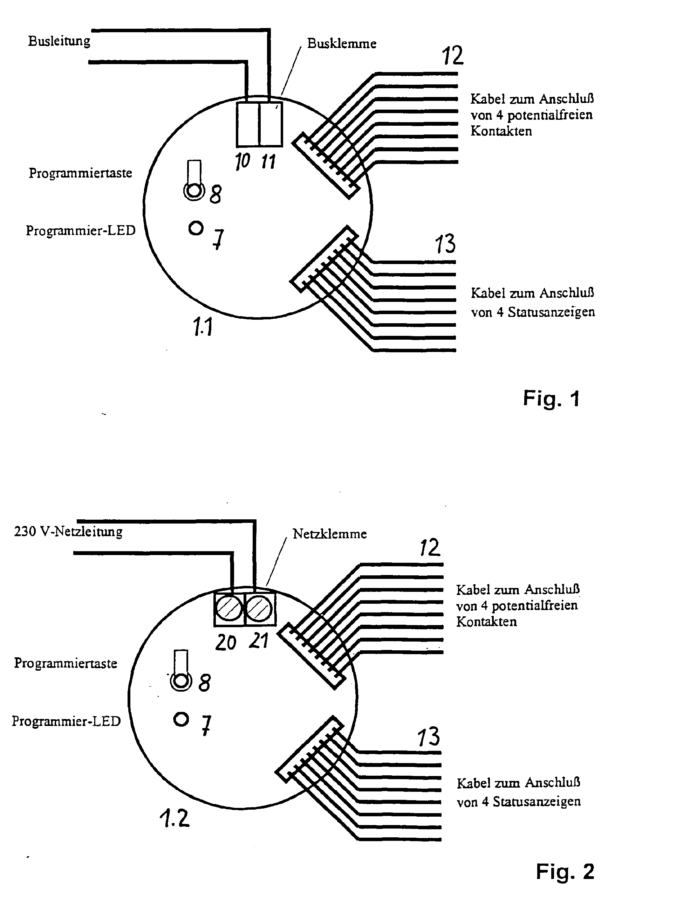

Fig. 1 zeigt eine Draufsicht auf eine erste Variante der Schnittstelleneinrichtung für den Betrieb an einem Bussystem mit besonderen Steuerleitungen. Die Schnittstelleneinrichtung 1.1 weist Busklemmen 10, 11 auf. Es sind erste Anschlußkabel 12 für den Anschluß von vorzugsweise vier potentialfreien Kontakten vorhanden; außerdem zweite Anschlußkabel 13 für den Anschluß von vier Anzeigemitteln für Statusanzeigen, vorzugsweise LEDs. Direkt an der Schnittstelleneinrichtung 1.1 sind eine Programmier-LED 7 als weitere Anzeige und eine Programmiertaste 8 angeordnet für die Vergabe einer physikalischen Adresse.

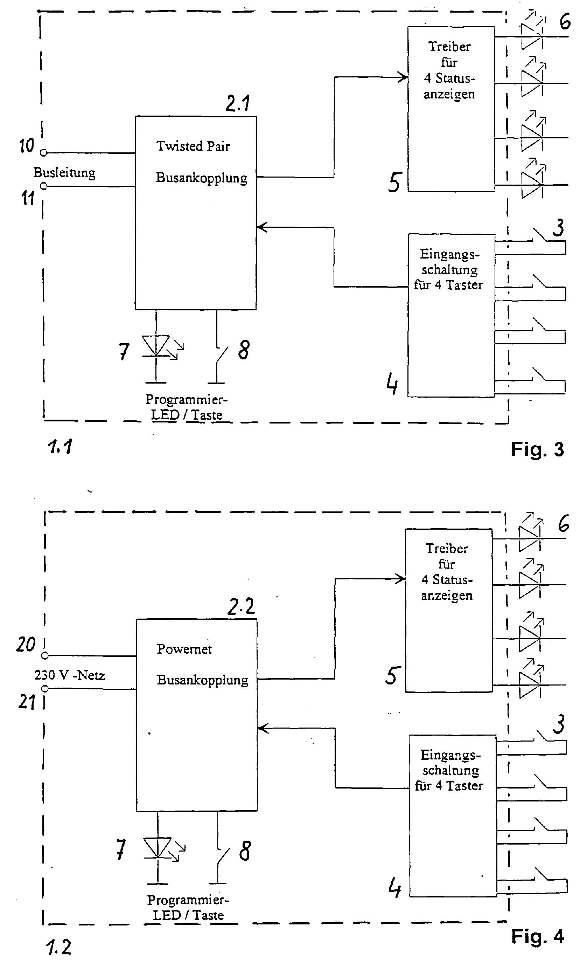

Fig. 3 zeigt die in der Schnittstelleneinrichtung 1.1 enthaltenen Funktionseinheiten. Eine beispielsweise aus dem EIB-System bekannte Busankopplung 2.1 ist verbunden mit den Busklemmen 10, 11 sowie der Programmiertaste 8 und der Programmier-LED 7. Außerdem ist die Busankopplung 2.1 verbunden mit Treibern 5 für vier Statusanzeigen 6 sowie mit einer Eingangsschaltung 4 für den Anschluß von vier Tastern 3.

Entweder in der Eingangsschaltung 4 oder in der Busankopplung 2.1 sind Mittel enthalten, die durch Programmierung oder Parametrierung eine Anpassung an unterschiedliche Eingabegeräte oder Funktionen ermöglichen. Solche Funktionen können beispielsweise sein: zyklisches Senden, parametrierbare Entprellzeiten, Dimmen, Jalousiesteuern oder Binärwertsenden.

Fig. 2 unterscheidet sich von Fig. 1 lediglich dadurch, daß eine zweite Variante der Schnittstelleneinrichtung dargestellt ist, wobei die Schnittstelleneinrichtung 1.2 statt Busklemmen Netzklemmen 20, 21 aufweist, an die Niederspannungsleitungen, z. B. eine 230Volt-Leitung anschließbar sind.

Entsprechend zeigt Fig. 4 die zur zweiten Variante der Schnittstelleneinrichtung gehörenden Funktionseinheiten. Fig. 4 unterscheidet sich von Fig. 3 durch die Busankopplung 1.2 für Netzbusbetrieb.

Die Programmierung von Funktionen kann bei allen Schnittstellenvarianten mittels Programmiergeräten erfolgen, die an die Busleitung oder Netzleitung anschließbar sind.

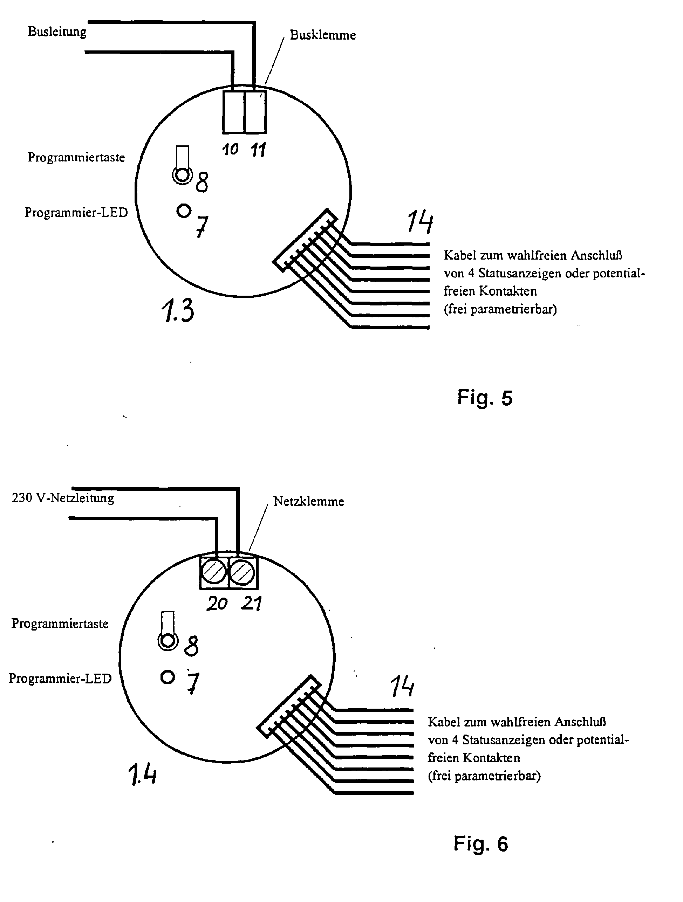

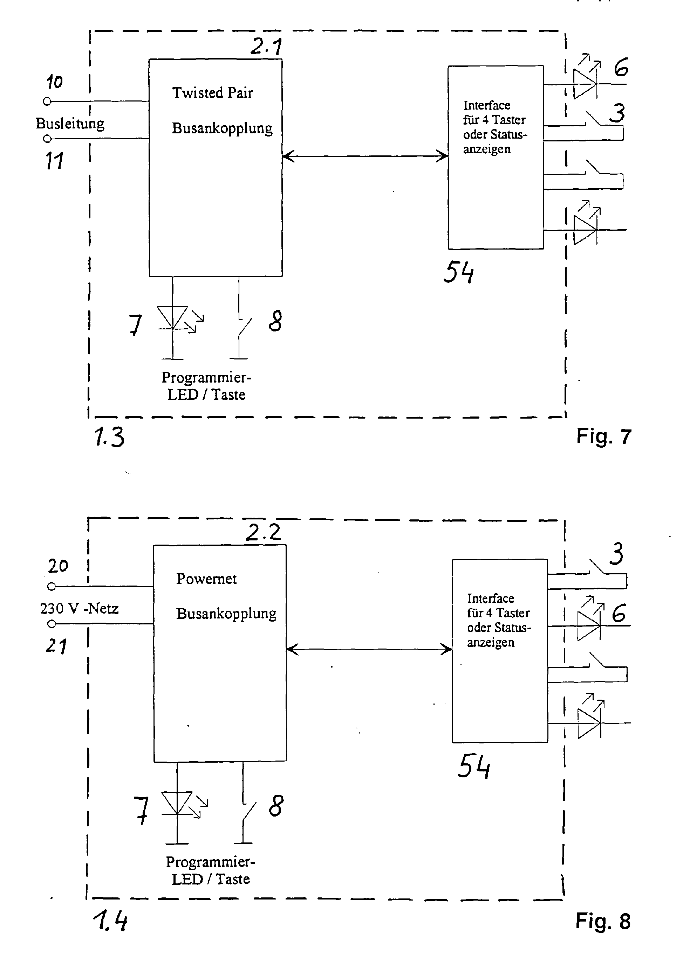

Fig. 5 zeigt eine Draufsicht auf eine dritte Variante der Schnittstelleneinrichtung 1.3. Sie ist wie die erste Variante für den Betrieb an einem Bussystem mit besonderen Steuerleitungen eingerichtet. Anstelle von Anschlußkabeln 12 für Kontakte und Anschlußkabeln 13 für Anzeigen sind jedoch Anschlußkabel 14 vorhanden, die je nach Parametrierung eines zugehörigen Interfaces 54 (siehe Fig. 7) für den Anschluß von Kontakten 3 oder Anzeigen 6 verwendbar sind.

Fig. 6 zeigt eine Draufsicht auf eine vierte Variante der Schnittstelleneinrichtung 1.4. Sie ist wie die zweite Variante (Fig. 2) mit einer Busankopplung 2.2 für Netzbusbetrieb eingerichtet und weist wie die dritte Variante (Fig. 5) parametrierbare Anschlußkabel 14 auf.

Fig. 7 zeigt die in der dritten Variante der Schnittstelleneinrichtung 1.3 enthaltenen Funktionseinheiten, insbesondere das parametrierbare Interface 54, das es ermöglicht, wahlweise Ein- oder Ausgabekanäle festzulegen.

Fig. 8 zeigt entsprechend die Funktionseinheiten der vierten Variante der Schnittstelleneinrichtung 1.4.

## Patentansprüche

1. Programmierbare Schnittstelleneinrichtung für Bussysteme der Gebäudesystemtechnik, wobei die Einrichtung für den Einbau in eine Unterputzdose oder in eine Abzweigdose ausgeführt und zwischen Busteilnehmer und Busleitung anschliessbar ist, und nachstehende Funktionseinheiten aufweist:
a) eine Busankopplung (2.1 oder 2.2) mit Busklemmen (10, 11 oder 20, 21) für Busleitungen eines Bussystems oder für Leitungen eines Niederspannungsnetzes, dem Steuersignale überlagert sind,
b) eine Treiberschaltung (5) für mehrere Statusanzeigen (6) und
c) eine Eingangsschaltung (4) für den Anschluß mehrerer potentialfreier Kontakte (3), wobei entweder die Eingangsschaltung (4) oder die Busankopplung (2.1, 2.2) programmierbar oder parametrierbar ausgeführt ist, sodass eine Anpassung an unterschiedliche Bedien -oder Eingabegeräte und für unterschiedliche Funktionen insbesondere für zyklisches Senden, parametrierbare Entprellzeiten, Dimmen, Jalousiesteuern oder Binärwertsenden eingerichtet ist.

2. Programmierbare Schnittsteilleneinrichtung nach Anspruch 1, **dadurch gekennzeichnet, daß** an die Busankopplung (2.1, 2.2) eine Programmiertaste (8) und eine Programmieranzeige (7) zur Vergabe einer physikalischen Adresse angeschlossen sind.

3. Programmierbare Schnittstelleneinrichtung nach Anspruch 1 oder 2, **dadurch gekennzeichnet, daß** die Treiberschaltung (5) für den Anschluß von lichtemittierenden Dioden oder anderen Leuchtmitteln als Statusanzeigen (6) eingerichtet ist.

4. Programmierbare Schnittstelleneinrichtung nach einem der vorstehenden Ansprüche, **dadurch gekennzeichnet, daß** sie Kabel (12) zum Anschluß von potentialfreien Kontakten und Kabel (13) zum Anschluß von Statusanzeigen aufweist.

5. Programmierbare Shnittstelleneinrichtung nach einem der vorstehenden Ansprüche, **dadurch gekennzeichnet, daß** anstelle einer Eingangsschaltung (4) und einer Treiberschaltung (5) ein parametrierbares Interface (54) vorhanden ist, mit dem Anschlußkabel (14) wahlweise als Eingang oder als Ausgang schaltbar sind.

## Claims

1. A programmable interface device for bus systems in system technology in buildings, with the device being arranged for installation in a wall socket or in a branch box and being connectable between bus subscriber and bus line, and comprises the following functional units:
a) a bus coupling (2.1 or 2.2) with bus terminals (10, 11 or 20, 21) for bus lines of a bus system or for LV network lines with superimposed control signals;
b) a driver circuit (5) for several status displays (6), and
c) an input circuit (4) for the connection of several potential-free contacts (3), with either the input circuit (4) or the bus coupling (2.1, 2.2) being arranged in a programmable or parameterizable manner, so that an adjustment is made to different operating or input devices and for different functions, especially for cyclic transmission, parameterizable debouncing times, dimming, shutter control or transmission of binary values.

2. A programmable interface device according to claim 1, **characterized in that** a programming button (8) and a programming display (7) for assigning a physical address are connected to the bus coupling (2.1, 2.2).

3. A programmable interface device according to claim 1 or 2, **characterized in that** the driver circuit (5) is arranged for the connection of light-emitting diodes or other lighting means as status displays (6).

4. A programmable interface device according to one of the preceding claims, **characterized in that** it comprises cables (12) for the connection of potential-free contacts and cables (13) for the connection of status displays.

5. A programmable interface device according to one of the preceding claims, **characterized in that** instead of an input circuit (4) and a driver circuit (5) a parameterizable interface (54) is present, with which the connecting cables (14) can be switched optionally as input or output.

## Revendications

1. Dispositif d'interface programmable pour des systèmes de bus dans les techniques de bâtiment, dans lequel le dispositif est conçu pour un montage dans une boîte sous enduit ou une boîte de dérivation et peut être raccordé entre les appareils connectés au bus et la ligne de bus, et présente les unités fonctionnelles suivantes :
a) une connexion de bus (2.1 ou 2.2) avec des bornes de bus (10, 11 ou 20, 21) pour des lignes de bus d'un système de bus ou pour des lignes d'un réseau basse tension auquel sont superposés des signaux de commande,
b) un circuit d'excitation (5) pour plusieurs indicateurs d'état (6) et
c) un circuit d'entrée (4) pour le branchement de plusieurs contacts sans potentiel (3), le circuit d'entrée (4) ou la connexion de bus (2.1,2.2) étant conçu pour être programmable ou paramétrable, de sorte qu'une adaptation à différents appareils de commande ou d'entrée et à différentes fonctions est prévue, en particulier en vue d'une émission cyclique, de temps d'élimination des rebonds paramétrables, de l'atténuation de l'éclairage, de la commande de stores ou de l'émission de valeurs binaires.

2. Dispositif d'interface programmable selon la revendication 1, **caractérisé en ce qu'**il est prévu raccordé à la connexion de bus (2.1, 2.2) un bouton de programmation (8) et un afficheur de programmation (7) pour l'indication d'une adresse physique.

3. Dispositif d'interface programmable selon la revendication 1 ou 2, **caractérisé en ce que** le circuit d'excitation (5) est conçu pour le raccordement de diodes électroluminescentes ou d'autres lampes servant d'indicateurs d'état (6).

4. Dispositif d'interface programmable selon l'une des revendications précédentes, **caractérisé en ce qu'**elle comporte des câbles (12) pour le raccordement de contacts sans potentiel et des câbles (13) pour le raccordement d'indicateurs d'état.

5. Dispositif d'interface programmable selon l'une des revendications précédentes, **caractérisé en ce qu'**au lieu d'un circuit d'entrée (4) et d'un circuit d'excitation (5), il est prévu une interface (54) paramétrable qui permet de commuter sélectivement des câbles de raccordement (14) comme entrée ou comme sortie.
